# EUROPÄISCHE PATENTSCHRIFT

(11) **EP 2 927 167 B1**
(45) Veröffentlichungstag und Bekanntmachung des Hinweises auf die Patenterteilung: **18.04.2018**
(21) Anmeldenummer: 14162933.7
(22) Anmeldetag: 31.03.2014
(51) Int. Cl.: B65G 51/28, B65G 51/30, B65G 54/02, G01N 35/04

(54) **Versandvorrichtung, Probenverteilungssystem und Laborautomatisierungssystem**
Dispatch device, sample distribution system and laboratory automation system
Dispositif d'envoi, système de distribution d'échantillons et système d'automatisation de laboratoire

(43) Veröffentlichungstag der Anmeldung: 07.10.2015
(73) Patentinhaber: F. Hoffmann-La Roche AG, 4070 Basel (CH); Roche Diagnostics GmbH, 68305 Mannheim (DE)
(72) Erfinder: Riether, Christian, 71397 Leutenbach (DE)
(74) Vertreter: Patentanwälte Ruff, Wilhelm, Beier, Dauster & Partner mbB

(56) Entgegenhaltungen:
- WO-A1-2013/064656
- SU-A1- 685 591
- US-A- 6 062 398
- US-A1- 2010 312 379
- US-A1- 2013 034 410
- US-A1- 2013 322 992

## Beschreibung

Die Erfindung betrifft eine Versandvorrichtung zum Versenden von in jeweiligen Probenträgern aufgenommenen Probenbehältern von einer Transportfläche eines Probenverteilungssystems zu einer bezogen auf die Transportfläche externen Position und/oder von der externen Position zu der Transportfläche. Die Erfindung betrifft des Weiteren ein Probenverteilungssystem mit einer solchen Versandvorrichtung sowie ein Laborautomatisierungssystem mit einem solchen Probenverteilungssystem.

Probenbehälter sind typischerweise längliche, einseitig offene Gefäße aus meist transparentem Glas oder Kunststoff, die zur Aufbewahrung und zum Transport von meist flüssigen Proben verwendet werden. Bei derartigen Proben handelt es sich beispielsweise um Blutproben.

Bei Laborautomatisierungssystemen ist es häufig notwendig, Proben in Probenbehältern zu einer Mehrzahl von unterschiedlichen Stationen des Laborautomatisierungssystems zu transportieren.

Das Dokument WO 2013/064656 A1 zeigt ein Probenverteilungssystem mit einer Anzahl von Probenträgern, die jeweils ein magnetisches Element aufweisen. Die Probenträger sind dazu ausgebildet, einen Probenbehälter, beispielsweise in Form eines Probenröhrchens, aufzunehmen. In den Probenbehältern sind zu analysierende Proben, beispielsweise Blutproben, enthalten. Das Probenverteilungssystem weist weiter eine Transporteinrichtung mit einer Transportfläche auf, die dazu ausgebildet ist, die Probenträger zu tragen. Das Probenverteilungssystem weist weiter eine Anzahl von elektromagnetischen Aktuatoren auf, die stationär unter der Transportfläche angeordnet sind. Die elektromagnetischen Aktuatoren sind dazu ausgebildet, einen jeweiligen Probenträger durch Ausüben einer magnetischen Kraft auf der Transportfläche zu bewegen. Eine Steuerungseinrichtung ist dazu ausgebildet, die elektromagnetischen Aktuatoren derart anzusteuern, dass sich ein jeweiliger Probenträger auf der Transportfläche entlang einer vorgebbaren Bewegungsbahn bewegt. Das Probenverteilungssystem dient zum Transportieren der Probenbehälter zwischen unterschiedlichen Stationen eines Laborautomatisierungssystems, wobei eine Bewegungsbahn typischerweise zwischen den unterschiedlichen Stationen verläuft.

Die US 2010/0312379 A1 zeigt eine Versandvorrichtung gemäß dem Oberbegriff des Anspruchs 1.

Die US 2013/0034410 A1 zeigt ein Probenverteilungssystem mit elektromagnetischen Aktuatoren für Probenträger mit einem Magneten.

Die SU 685591 A1 zeigt eine Rohrpost für Probenbehälter.

Die US 6,062,398 A zeigt einen Einsatz zum Halten von Teströhrchen in einer Transportkapsel eines pneumatischen Rohrverteilungssystems.

Bekannte Probenverteilungssysteme können Probenträger zuverlässig zwischen unterschiedlichen Stationen bewegen oder auch auf der Transportfläche für gewisse Zeit lagern. Es kann jedoch auch erforderlich sein, Proben auf die Transportfläche zu bringen oder von der Transportfläche zu einem entfernt liegenden Gerät, beispielsweise einer weiteren Transportfläche, zu versenden. Dies erfordert bei gattungsgemäßen Probenverteilungssystemen typischerweise manuelle Eingriffe.

### Aufgabe und Lösung

Es ist eine Aufgabe der Erfindung, eine Versandvorrichtung vorzusehen, mit welcher Probenträger von der Transportfläche eines Probenverteilungssystems zu einer externen Position oder von der externen Position zu der Transportfläche versendet werden können, ohne dass manuelle Eingriffe nötig sind. Es ist ferner eine Aufgabe der Erfindung, ein Probenverteilungssystem mit einer solchen Versandvorrichtung vorzusehen. Außerdem ist es eine Aufgabe der Erfindung, ein Laborautomatisierungssystem mit einem solchen Probenverteilungssystem vorzusehen.

Dies wird erfindungsgemäß durch eine Versandvorrichtung nach Anspruch 1, ein Probenverteilungssystem nach Anspruch 5 und ein Laborautomatisierungssystem nach Anspruch 11 erreicht. Vorteilhafte Ausgestaltungen können beispielsweise den jeweiligen Unteransprüchen entnommen werden. Der Wortlaut sämtlicher Ansprüche wird durch ausdrückliche Inbezugnahme zum Inhalt der Beschreibung gemacht.

Die Erfindung betrifft eine Versandvorrichtung zum Versenden von in jeweiligen Probenträgern aufgenommenen Probenbehältern von einer Transportfläche eines Probenverteilungssystems zu einer bezogen auf die Transportfläche externen Position und/oder von der externen Position zu der Transportfläche. Ein jeweiliger Probenträger, welcher nicht zur Versandvorrichtung gehört und der einen oder mehrere Probenbehälter aufnehmen kann, weist dabei mindestens ein magnetisch wirksames Element auf, das dazu ausgebildet ist, mit einem mittels mindestens eines elektromagnetischen Aktuators erzeugten Magnetfeld derart wechselzuwirken, dass eine Antriebskraft auf den Probenträger bewirkt wird.

Die Versandvorrichtung weist Folgendes auf:
- ein Rohr, welches von der Transportfläche zu der externen Position führt,
- eine Kapsel, die in dem Rohr zwischen der Transportfläche und der externen Position bewegbar ist und die eine Förderfläche zur Aufnahme des Probenträgers aufweist,
- eine Antriebseinheit, die dazu ausgebildet ist, die Kapsel in dem Rohr zwischen der Transportfläche und der externen Position zu bewegen, und
- mindestens einen elektromagnetischen Aktuator, der auch als Förderflächenaktuator bezeichnet werden kann und der unterhalb der Förderfläche angeordnet ist und der dazu ausgebildet ist, den Probenträger mit einer Antriebskraft zu beaufschlagen.

Mittels der erfindungsgemäßen Versandvorrichtung ist es möglich, Probenträger mit darin aufgenommenen Probenbehältern automatisiert und trotzdem ohne besonderen apparativen Aufwand von einer Transportfläche zu einer externen Position oder von der externen Position zu der Transportfläche zu versenden. Dabei kann sowohl auf manuelle Eingriffe wie auch auf aufwändige Transportsysteme verzichtet werden.

Mittels eines jeweiligen Probenträgers können einzelne oder mehrere Proben bzw. Probenbehälter beispielsweise zwischen präanalytischen, analytischen und/oder postanalytischen Stationen transportiert werden. Insbesondere kann es sich dabei um Stationen eines Laborautomatisierungssystems handeln. Eine präanalytische Station dient dabei üblicherweise der Vorverarbeitung von Proben bzw. Probenbehältern. Eine analytische Station kann beispielsweise dazu ausgebildet sein, eine Probe oder einen Teil der Probe und ein Reagens zu verwenden, um ein messbares Signal zu erzeugen, auf Basis dessen bestimmbar ist, ob und gegebenenfalls in welcher Konzentration ein Analyt vorhanden ist. Eine postanalytische Station dient üblicherweise der Nachverarbeitung von Proben bzw. Probenbehältern. Mittels der erfindungsgemäßen Versandvorrichtung kann sich eine solche präanalytische, analytische oder postanalytische Station beispielsweise auch an der externen Position befinden, wobei sie trotzdem ohne manuelle Zwischenschritte eine Probe erhalten oder abgeben kann.

Die erfindungsgemäße Versandvorrichtung kann beispielsweise auch dazu verwendet werden, Proben in jeweiligen Probenbehältern von einem externen Probenlieferanten, wie beispielsweise Aufnahmestationen in einem Krankenhaus, zu erhalten. In solche Aufnahmestationen können beispielsweise Ärzte Blutproben, welche sie Patienten entnommen haben, einbringen und damit zu der Transportfläche versenden. Der Ort, an welchem eine solche Aufnahmestation aufgestellt ist, kann dann beispielsweise als externe Position bezeichnet werden.

Der elektromagnetische Aktuator, vorzugsweise ein Elektromagnet, welcher unterhalb der Förderfläche angeordnet ist, kann gemäß einer Ausführung mit der Kapsel elektrisch und mechanisch verbunden und somit auch mit der Kapsel bewegbar sein. Anders ausgedrückt wird bei dieser Ausführung der elektromagnetische Aktuator in dem Rohr mit versendet. Der elektromagnetische Aktuator kann jedoch gemäß einer alternativen Ausführung auch stationär sein, d.h. er verbleibt an einer bestimmten Position, welche typischerweise benachbart zur Transportfläche liegt. In diesem Fall kann beispielsweise vorgesehen sein, dass der stationäre elektromagnetische Aktuator schwenkbar ist, so dass er nach Ankunft einer Kapsel unter die Förderfläche bewegt wird und zum Abtransport der Kapsel wieder aus dem beabsichtigten Bewegungsbereich der Kapsel herausgeschwenkt wird.

Der Probenträger kann mit der Antriebskraft beaufschlagt werden, um den Probenträger in die Kapsel einzufahren oder aus dieser herauszufahren. Dies ermöglicht idealerweise eine ununterbrochene Bewegung eines Probenträgers auf der Transportfläche und anschließend in die Kapsel hinein oder aus der Kapsel heraus mit einer anschließenden ununterbrochenen Bewegung auf der Transportfläche.

Die Kapsel kann eine verschließbare Öffnung zum Einbringen des Probenträgers mit einem darin aufgenommenen Probenbehälter aufweisen. Dies ermöglicht sowohl ein ungehindertes Einbringen des Probenträgers mit dem Probenbehälter wie auch einen Schutz während des Versendens. Das Rohr kann eine verschließbare Öffnung aufweisen, durch welche im offenen Zustand die Öffnung der Kapsel zugänglich ist. Eine solche Öffnung kann das Rohr gegenüber der Umgebung während des Versendens abschließen, was beispielsweise vorteilhaft sein kann, wenn die Kapsel mittels Über- und/oder Unterdruck durch das Rohr bewegt wird. Dies wird weiter unten näher erläutert.

Die Versandvorrichtung kann dazu ausgebildet sein, den Probenbehälter vor oder nach dem Einbringen in die Kapsel zu verschließen. Die Versandvorrichtung kann hierzu beispielsweise einen betätigbaren Verschluss oder Pfropfen aufweisen, der in der Kapsel durch einen Aktuator, beispielsweise in Form einer Feder, auf den Probenbehälter gedrückt wird. Damit kann ein Auslaufen der Probe aus dem Probenbehälter in vorteilhafter Weise vermieden werden. Insbesondere kann ein Auslaufen der Probe auch dann vermieden werden, wenn der Probenbehälter beispielsweise während des Versendens verkippt wird.

Die Versandvorrichtung kann eine Überprüfungseinrichtung auf, und zwar zum Überprüfen, ob ein Probenbehälter vor dem Einbringen in die Kapsel verschlossen ist. Damit kann vermieden werden, dass nicht verschlossene Probenbehälter in die Kapsel eingebracht werden und versendet werden, was beispielsweise bei entsprechender Verkippung zum Auslaufen der Probe führen kann.

Die Kapsel kann eine Haltevorrichtung aufweisen, die dazu ausgebildet ist, den Probenträger mit dem Probenbehälter in der Kapsel zu fixieren. Mittels einer solchen Haltevorrichtung kann ein Verkippen von Probenträger und/oder Probenbehälter relativ zur Kapsel während des Versendens vermieden werden. Außerdem können unkontrollierte Bewegungen des Probenträgers und/oder des Probenbehälters in der Kapsel während des Versendens vermieden werden, was beispielsweise ein Auslaufen von Proben oder eine Beschädigung des Probenbehälters während des Versendens verhindert.

Die Kapsel kann eine quer zur Förderfläche weisende Längsrichtung aufweisen, wobei sich die Kapsel im Rohr unter weitgehender Parallelität der Längsrichtung der Kapsel mit einer Längserstreckung des Rohrs bewegt. Dies entspricht einer typischen Ausführung einer Rohrpost. Somit kann beispielsweise bei der Ausführung auf bekannte Komponenten zum Ausbilden einer Rohrpost zurückgegriffen werden.

Gemäß einer Ausführung weist die Kapsel eine Mehrzahl von Förderflächen auf, wobei unter einer jeweiligen Förderfläche mindestens ein elektromagnetischer Aktuator angeordnet ist, und wobei die Kapsel ferner Mittel zum Verbringen einer der Förderflächen an eine bestimmte Position aufweist, die zum Be- und/oder Entladen geeignet ist. Mittels einer solchen Ausführung können mehrere Probenträger mit jeweiligen Probenbehältern mittels nur eines Versandvorgangs versendet werden. Durch die Mittel zum Verbringen einer der Förderflächen an eine bestimmte Position kann eine bestimmte Förderfläche, welche be- und/oder entladen werden soll, so an die Transportfläche verbracht werden, dass das Be- und/oder Entladen möglich ist.

Die Mehrzahl von Förderflächen kann beispielsweise entlang eines Kreises angeordnet sein und kann drehbar sein, beispielsweise mittels eines Elektromotors. Eine solche Ausführung kann ähnlich einem Revolvermagazin ausgebildet sein.

Das Vorsehen von elektromagnetischen Aktuatoren unter der Mehrzahl von Förderflächen kann beispielsweise so erfolgen, dass unter jeder Förderfläche ein jeweils zugeordneter elektromagnetischer Aktuator angeordnet ist, welcher sich starr mit der Förderfläche mitbewegt und beispielsweise auch mitdreht. Alternativ kann auch ein einziger elektromagnetischer Aktuator vorgesehen sein, welcher sich typischerweise an einer Position befindet, welche zum Be- und/oder Entladen von Probenträgern geeignet ist. Wie bereits weiter oben ausgeführt wurde, kann ein solcher elektromagnetischer Aktuator beispielsweise schwenkbar ausgeführt sein, um eine Bewegung der Kapsel zum Versenden und/oder in diesem Fall beispielsweise auch ein Drehen der Förderflächen zu ermöglichen.

Die Antriebseinheit kann dazu ausgebildet sein, einen Über- und/oder Unterdruck in dem Rohr zu erzeugen, um die Kapsel durch das Rohr zu bewegen. Dies entspricht einer effizienten Möglichkeit zur Bewegung solcher Kapseln durch ein Rohr, ähnlich einer bekannten Rohrpost. Somit kann zumindest teilweise auf bekannte Komponenten zurückgegriffen werden. Die Antriebseinheit kann weiter Räder, Schleppriemen oder ähnliches aufweisen.

Die Versandvorrichtung kann Mittel zum Identifizieren der Kapsel aufweisen, wodurch beispielsweise mehrere Kapseln in der Versandvorrichtung verwendet werden können. Damit kann die Versandvorrichtung beispielsweise erkennen, von welcher externen Position, also beispielsweise von welcher Aufnahmestation eine Kapsel kommt, wenn mehrere Möglichkeiten hierzu bestehen.

Die Kapsel kann Mittel zur Verschlusssicherung aufweisen, so dass alle möglicherweise losen und/oder offenen Komponenten vor dem Versenden der Kapsel auf ihren Zustand überprüft werden. Damit kann beispielsweise ein Versenden der Kapsel mit nicht verschlossener Öffnung vermieden werden. Weiter kann anhand der Mittel zur Verschlusssicherung auch die Integrität einer Probe untersucht werden, da auf diese Weise ein nicht gewünschtes Öffnen der Probe erkannt werden kann. Dies ist beispielsweise dann nützlich, wenn ein Defekt auftritt und eine zu transportierende Probe aus dem System entnommen werden muss. Es ist dann möglich, die Probe an der defekten Stelle zu entnehmen und an anderer Stelle wieder zuführen. Wird die Probe geöffnet, gilt sie als kompromittiert und wird entsorgt.

Die Erfindung betrifft des Weiteren ein Probenverteilungssystem, aufweisend:
- eine Anzahl von Probenträgern zur Aufnahme eines oder mehrerer Probenbehälter, wobei ein jeweiliger Probenträger mindestens ein magnetisch wirksames Element aufweist, das dazu ausgebildet ist, mit einem mittels mindestens eines elektromagnetischen Aktuators erzeugten Magnetfeld derart wechselzuwirken, dass eine Antriebskraft auf den Probenträger bewirkt wird,
- eine Transportfläche, die dazu ausgebildet ist, den Probenträger zu tragen,
- eine Anzahl von elektromagnetischen Aktuatoren, die auch als Transportflächenaktuatoren bezeichnet werden können und die stationär unter der Transportfläche angeordnet sind, wobei die elektromagnetischen Aktuatoren dazu ausgebildet sind, Probenträger, die auf der Transportfläche angeordnet sind, durch Ausüben einer magnetischen Kraft auf den Probenträger zu bewegen,
- eine erfindungsgemäße Versandvorrichtung, und
- eine Steuerungseinrichtung, die dazu ausgebildet ist,
   - die unter der Transportfläche angeordneten elektromagnetischen Aktuatoren bzw. Transportflächenaktuatoren derart anzusteuern, dass sich ein jeweiliger Probenträger auf der Transportfläche entlang einer vorgebbaren Bewegungsbahn bewegt,
   - den mindestens einen unter der Förderfläche angeordneten elektromagnetischen Aktuator bzw. Förderflächenaktuator und/oder die unter der Transportfläche angeordneten elektromagnetischen Aktuatoren bzw. Transportflächenaktuatoren derart anzusteuern, dass ein Probenträger von der Transportfläche in Richtung der Förderfläche oder von der Förderfläche in Richtung der Transportfläche bewegt wird, und
   - die Antriebseinheit derart anzusteuern, dass die Kapsel in dem Rohr zwischen der Transportfläche und der externen Position bewegt wird.

Die Anzahl von elektromagnetischen Aktuatoren, die auch als Transportflächenaktuatoren bezeichnet werden können und die stationär unter der Transportfläche angeordnet sind, können matrixartig verteilt sein, so dass eine zweidimensionale Bewegung über die Transportfläche bewirkt werden kann.

Mittels des erfindungsgemäßen Probenverteilungssystems können die Vorteile einer erfindungsgemäßen Versandvorrichtung für ein Probenverteilungssystem nutzbar gemacht werden. Hinsichtlich der Versandvorrichtung kann auf alle weiter oben beschriebenen Ausführungsformen zurückgegriffen werden.

Insbesondere können jeweilige Probenträger nicht nur auf der Transportfläche bewegt werden, sondern können auch in vorteilhafter Weise zu einer externen Position versendet werden. Auf manuelle Eingriffe kann dabei ebenso verzichtet werden wie auf komplizierte Transportmechanismen.

Bei den Probenträgern, welche von der Transportfläche in Richtung der Förderfläche bewegt werden, handelt es sich typischerweise um zu versendende Probenträger. Bei den Probenträgern, welche von der Förderfläche in Richtung der Transportfläche bewegt werden, handelt es sich typischerweise um versendete Probenträger. Unter einem versendeten Probenträger wird insbesondere ein Probenträger verstanden, welcher an der externen Position in die Kapsel eingefügt wurde und welcher auf die Transportfläche zum Verteilen aufgenommen werden soll.

Die Kapsel kann durch Verfahren in dem Rohr in eine Position verbringbar sein, in welcher die Förderfläche eine ebene Erweiterung der Transportfläche bildet. Dies kann beispielsweise durch geeignete Anschläge erreicht werden. Mittels einer solchen Anordnung der Förderfläche relativ zur Transportfläche ist es möglich, Probenträger ohne Hindernisse wie beispielsweise Absätze oder schiefe Ebenen von der Transportfläche auf die Förderfläche und umgekehrt zu verfahren.

Es sei verstanden, dass bei entsprechender Ausgestaltung der Kapsel und/oder des Rohrs die Förderfläche erst dann eine ebene Erweiterung der Transportfläche bildet, wenn entsprechende Öffnungen in dem Rohr bzw. in der Kapsel geöffnet wurden. Auch kann es erforderlich sein, zunächst eine gewünschte Förderfläche in eine Position benachbart zur Transportfläche zu verbringen, beispielsweise durch Drehen. Dies wurde weiter oben beispielsweise mit Bezug auf eine Kapsel mit mehreren Förderflächen beschrieben.

Die Steuerungseinrichtung kann für den Zweck des Versendens eines sich auf der Transportfläche befindlichen Probenträgers dazu ausgebildet sein,
- die Antriebseinheit derart anzusteuern, dass die Kapsel in eine Ladeposition bewegt wird, in der die Förderfläche eine ebene Erweiterung der Transportfläche bildet,
- die unter der Transportfläche angeordneten elektromagnetischen Aktuatoren derart anzusteuern, dass der zu versendende Probenträger auf der Transportfläche zu der Kapsel bewegt wird,
- den mindestens einen unter der Förderfläche angeordneten elektromagnetischen Aktuator und/oder die unter der Transportfläche angeordneten elektromagnetischen Aktuatoren derart anzusteuern, dass der Probenträger auf die Förderfläche bewegt wird, und
- die Antriebseinheit derart anzusteuern, dass die Kapsel durch das Rohr in Richtung der externen Position bewegt wird.

Durch eine solche Ausbildung der Steuerungseinrichtung kann in vorteilhafter Weise ein automatisiertes Versenden eines Probenträgers mit darin enthaltenem Probenbehälter von der Transportfläche zu der externen Position erreicht werden.

Bei der Steuerungseinrichtung kann es sich beispielsweise um einen Computer, einen Mikrocontroller, einen Mikroprozessor, eine speicherprogrammierbare Steuerung (SPS) oder Ähnliches handeln. Die Steuerungseinrichtung kann beispielsweise Prozessormittel und Speichermittel aufweisen, wobei in den Speichermitteln Programmcode gespeichert ist, bei dessen Ausführung sich die Steuerungseinrichtung in definierter Weise verhält.

Die Steuerungseinrichtung kann zum Zweck des Empfangens eines sich in der Kapsel befindlichen Probenträgers dazu ausgebildet sein,
- die Antriebseinheit derart anzusteuern, dass die Kapsel mit dem darin enthaltenen Probenträger in eine Ladeposition bewegt wird, in der die Förderfläche eine ebene Erweiterung der Transportfläche bildet, und
- die unter der Transportfläche angeordneten elektromagnetischen Aktuatoren und/oder den mindestens einen unter der Transportfläche angeordneten elektromagnetischen Aktuator derart anzusteuern, dass der Probenträger auf die Transportfläche bewegt wird.

Durch eine solche Ausbildung der Steuerungseinrichtung kann in vorteilhafter Weise eine Aufnahme eines Probenträgers mit darin aufgenommenem Probenbehälter von der externen Position erreicht werden. Beispielsweise können auf diese Weise Proben von einem externen Analysegerät, von einem Probenlieferanten wie beispielsweise einer Aufnahmestation, einem Krankenhaus oder von einer anderen Probenquelle aufgenommen werden.

Gemäß einer Weiterbildung weist das Probenverteilungssystem eine weitere Transportfläche an der externen Position auf, die dazu ausgebildet ist, Probenträger zu tragen, und weist ferner eine Anzahl von weiteren elektromagnetischen Aktuatoren auf, die stationär unter der weiteren Transportfläche angeordnet sind, wobei die weiteren elektromagnetischen Aktuatoren dazu ausgebildet sind, Probenträger, die auf der weiteren Transportfläche angeordnet sind, durch Ausüben einer magnetischen Kraft auf den Probenträger zu bewegen. Die Versandvorrichtung ist dabei dazu ausgebildet, einen Probenträger von der Transportfläche zu der weiteren Transportfläche zu versenden und/oder von der weiteren Transportfläche zu der Transportfläche zu versenden.

Mittels eines derart weiterentwickelten Probenverteilungssystems können zwei räumlich getrennte Transportflächen miteinander verbunden werden, so dass ein Austausch von Proben mit darin enthaltenen Probenbehältern möglich ist. Dies ermöglicht eine erhebliche Erhöhung der Flexibilität beim Aufbau eines Probenverteilungssystems.

Die Steuerungseinrichtung kann dazu ausgebildet sein, die unter der weiteren Transportfläche angeordneten elektromagnetischen Aktuatoren derart anzusteuern, dass sich ein jeweiliger Probenträger auf der Transportfläche entlang einer vorgebbaren Bewegungsbahn bewegt. Damit kann die weitere Transportfläche in ähnlicher oder gleicher Weise verwendet werden wie die Transportfläche und kann überdies von der gleichen Steuerungseinrichtung gesteuert werden.

Die weitere Transportfläche kann sich beispielsweise in einem anderen Raum befinden, so dass eine Aufteilung des Probenverteilungssystems über mehrere Räume, mehrere Stockwerke, mehrere Bauwerke oder Ähnliches möglich ist.

Die Transportfläche kann in logische Felder unterteilt sein, wobei jedes logische Feld jeweils einem elektromagnetischen Aktuator aus der Anzahl von elektromagnetischen Aktuatoren bzw. aus der Anzahl von weiteren elektromagnetischen Aktuatoren zugeordnet ist, wobei die Förderfläche der Kapsel ein weiteres logisches Feld bildet, und wobei die Steuerungseinrichtung das von der Förderfläche gebildete logische Feld als logisches Feld einer der Transportflächen handhabt, wenn die Förderfläche eine ebene Erweiterung der jeweiligen Transportfläche bildet. Damit kann eine einfache Realisierung der internen Abläufe in der Steuerungseinrichtung erreicht werden, da die Steuerungseinrichtung hinsichtlich der Ansteuerung der elektromagnetischen Aktuatoren nicht auf eine Trennung zwischen der Transportfläche und der Förderfläche Rücksicht nehmen muss.

Es sei verstanden, dass auch alternative Mechanismen für den Übergang von der Transportfläche in die Kapsel, d.h. für das Verbringen eines Probenträgers mit darin aufgenommenem Probenbehälter von der Transportfläche auf die Förderfläche und umgekehrt verwendet werden können. Beispielsweise kann hierfür ein Greifarm, ein Schleppriemen oder eine andere Einrichtung zum Bewegen der Transportvorrichtung verwendet werden. Ausführungen einer Versandvorrichtung und eines Probenverteilungssystems mit Verwendung eines solchen Mechanismus, also insbesondere eines Greifarms oder eines Schleppriemens, anstelle eines elektromagnetischen Aktuators können als eigenständige Erfindungsgedanken aufgefasst werden. Hinsichtlich weiterer Details dieser Erfindungsgedanken kann auf die obigen Ausführungen verwiesen werden, sofern diese mit der Verwendung eines Greifarms, eines Schleppriemens oder eines anderen Mechanismus kompatibel sind.

Das Laborautomatisierungssystem weist eine Anzahl (beispielsweise zwischen zwei und zwanzig) von präanalytischen und/oder analytischen und/oder postanalytischen Stationen auf, die dazu ausgebildet sind, Probenbehälter und/oder Proben, die in den Probenbehältern enthalten sind, zu bearbeiten oder zu verarbeiten. Das Bearbeiten bzw. Verarbeiten kann beispielsweise ein Lesen eines Barcodes, ein Entfernen einer Kappe auf dem Röhrchen, ein Zentrifugieren der Probe, ein Aliquotieren der Probe, ein Analysieren der Probe usw. umfassen. Das Laborautomatisierungssystem weist weiter ein oben genanntes Probenverteilungssystem zum Transportieren der Probenbehälter zwischen den präanalytischen, analytischen und postanalytischen Stationen auf.

Die präanalytischen, analytischen und postanalytischen Stationen können beispielsweise mindestens eine Station aus der Menge folgender Stationen aufweisen: eine Kappenentfernungsstation zum Entfernen von Kappen bzw. Verschlüssen auf Probenröhrchen, eine Kappenaufbringstation zum Aufbringen von Kappen bzw. Verschlüssen auf Probenröhrchen, eine Aliquotierstation zum Aliquotieren von Proben, eine Zentrifugierstation zum Zentrifugieren von Proben, eine Archivierstation zum Archivieren von Proben, eine Pipettierstation zum Pipettieren, eine Sortierstation zum Sortieren von Proben bzw. Probenröhrchen, eine Probenröhrchentypbestimmungsstation zum Bestimmen eines Typs eines Probenröhrchens und eine Probenqualitätsbestimmungsstation zum Bestimmen einer Probenqualität.

### Kurze Beschreibung der Zeichnung

Die Erfindung wird nachfolgend unter Bezugnahme auf die Zeichnungen detailliert beschrieben. Hierbei zeigt schematisch:
- Fig. 1:: eine Kapsel gemäß einem ersten Ausführungsbeispiel,
- Fig. 2:: eine Kapsel gemäß einem zweiten Ausführungsbeispiel,
- Fig. 3a und 3b:: ein Probenverteilungssystem mit einer Versandvorrichtung.

### Detaillierte Beschreibung der Ausführungsbeispiele

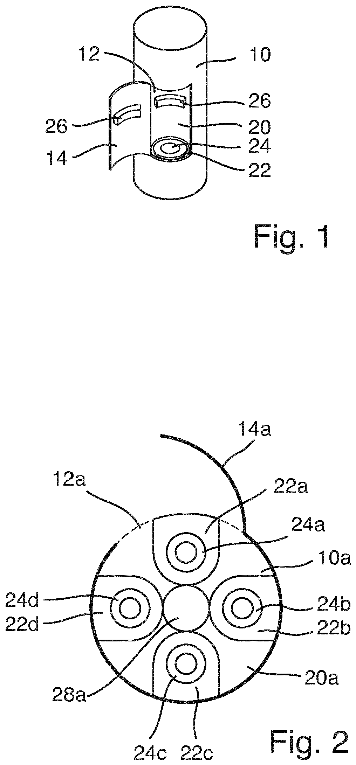

Fig. 1 zeigt eine Kapsel 10 gemäß einem ersten Ausführungsbeispiel. Die Kapsel 10 ist ausgebildet zum Versenden von Probenträgern mit darin aufgenommenen Probenbehältern, beispielsweise mittels einer erfindungsgemäßen Versandvorrichtung.

Die Kapsel 10 weist eine Öffnung 12 auf, welche mittels einer Klappe 14 verschlossen werden kann. In Fig. 1 ist die Klappe 14 in einem offenen Zustand dargestellt, so dass auch die Öffnung 12 offen ist. Hierdurch ist ein Innenraum 20 der Kapsel 10 zugänglich.

An einer Unterseite des Innenraums 20 befindet sich eine Förderfläche 22, auf welcher ein Probenträger aufgenommen werden kann. Unterhalb der Förderfläche 22 ist ein Elektromagnet 24 angeordnet, mittels welchem eine Kraft auf einen Probenträger, der ein magnetisch wirksames Element in Form eines Permanentmagneten beinhaltet, ausgeübt werden kann.

Der Innenraum 20 ist zylinderförmig ausgeführt. Um einen Probenträger und einen darin enthaltenen Probenbehälter während eines Transports in der Kapsel 10 besser zu fixieren, weist die Kapsel 10 in dem Innenraum 20 eine Haltevorrichtung in Form zweier Backen 26 auf. Damit wird ein Umkippen oder Umherfliegen eines Probenbehälters in der Kapsel 10 vermieden.

Fig. 2 zeigt eine Kapsel 10a gemäß einem zweiten Ausführungsbeispiel, welches im Vergleich zu dem ersten Ausführungsbeispiel insofern abgewandelt ist, als die Kapsel 10a gemäß dem zweiten Ausführungsbeispiel nicht nur eine einzelne Förderfläche zum Aufnehmen von Probenträgern mit darin enthaltenen Probenbehältern aufweist, sondern insgesamt vier Förderflächen 22a, 22b, 22c, 22d aufweist. Somit können insgesamt vier Probenträger mit darin enthaltenen Probenbehältern in der Kapsel 10a gleichzeitig transportiert werden. Jede der vier Förderflächen 22a, 22b, 22c, 22d weist einen jeweils darunter angeordneten Elektromagneten 24a, 24b, 24c, 24d auf, so dass mittels dieser Elektromagnete 24a, 24b, 24c, 24d jeweils eine Kraft auf einen Probenträger mit einem magnetisch wirksamen Element ausgeübt werden kann.

Die Kapsel 10a gemäß dem zweiten Ausführungsbeispiel weist eine Öffnung 12a auf, welche mittels einer Klappe 14a verschließbar ist. Die Klappe 14a ist vorliegend in einem geöffneten Zustand gezeigt. Mittels der Öffnung 12a ist ein Innenraum 20a der Kapsel 10a zugänglich.

Durch die Öffnung 12a ist jeweils nur eine der vier Förderflächen 22a, 22b, 22c, 22d zugänglich. Um auswählen zu können, welche von den vier Förderflächen 22a, 22b, 22c, 22d zugänglich sein soll, ist mittig in dem Innenraum 20a der Kapsel 10a ein Elektromotor 28a angeordnet, mittels welchem die vier Förderflächen 22a, 22b, 22c, 22d in dem Innenraum 20a entlang einer Kreisbahn bewegt werden können. Somit kann eine gewünschte Förderfläche der vier Förderflächen 22a, 22b, 22c, 22d so angeordnet werden, dass sie durch die Öffnung 12a bei geöffneter Klappe 14a zugänglich ist.

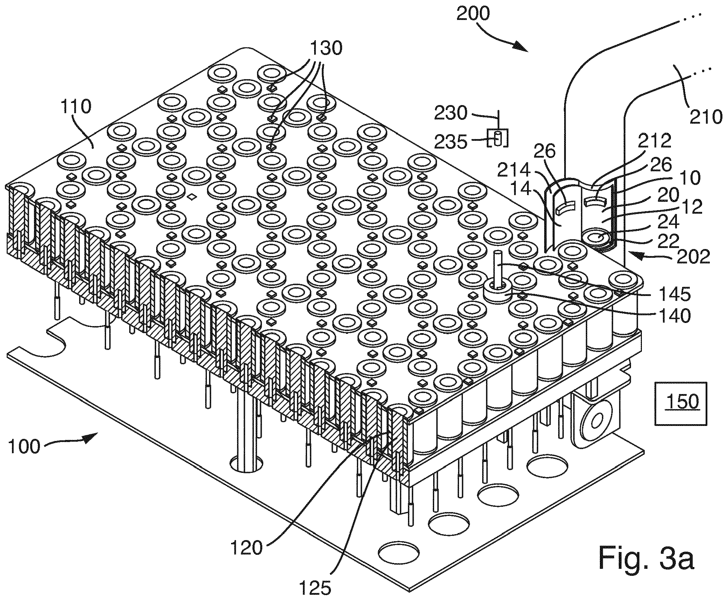

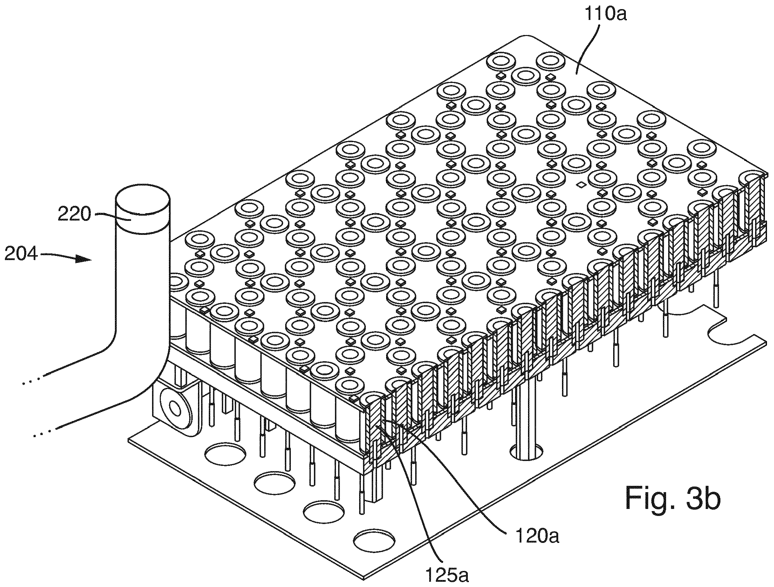

Die Fig. 3a und 3b zeigen ein erfindungsgemäßes Probenverteilungssystem 100 mit einer erfindungsgemäßen Versandvorrichtung 200. Das erfindungsgemäße Probenverteilungssystem 100 weist zwei räumlich getrennte Transportflächen 110 und 110a auf, die jeweils ebene Oberflächen zum zweidimensionalen Transport von Probenträgern 140 bereitstellen. Vorliegend ist auf der Transportfläche 110 ein Probenträger 140 mit einem darin aufgenommenen Probenbehälter in Form eines reagenzglasartig ausgeführten Probenröhrchens 145 gezeigt. Es sei verstanden, dass grundsätzlich eine beliebige Anzahl von Probenbehältern 145 auf den Transportflächen 110 und 110a angeordnet sein kann und dass sich diese auf den Transportflächen 110 und 110a bewegen können.

Zum Antrieb des Probenträgers 140 sind unter der Transportfläche 110 bzw. 110a eine Anzahl von elektromagnetischen Aktuatoren in Form von Elektromagneten 120 bzw. 120a mit jeweiligen Kernen 125 bzw. 125a angeordnet. Diese sind einzeln ansteuerbar, so dass diese in definierter Weise magnetische Felder erzeugen können. In dem Probenträger 140 befindet sich ein magnetisch wirksames Element in Form eines Permanentmagneten, so dass der Probenträger 140 mittels eines durch die Elektromagnete 120 bzw. 120a erzeugten Magnetfelds auf der Transportfläche 110 bzw. 110a bewegt werden kann.

Auf der Transportfläche 110 bzw. 110a ist ferner eine Anzahl von Positionssensoren in Form von Hall-Sensoren 130 angeordnet, mittels derer die Position des Probenträgers 140 auf der Transportfläche 110 bzw. 110a erkannt werden kann.

Das Probenverteilungssystem 100 weist ferner eine erfindungsgemäße Transportvorrichtung 200 auf. Diese weist ein Rohr 210 auf und ist somit ähnlich einer Rohrpost ausgebildet. Das Rohr 210 verbindet eine erste Position 202, welche an der Transportfläche 110 definiert ist, mit einer entfernten Position 204, auf die weiter unten noch näher eingegangen wird.

In dem Rohr 210 ist eine Öffnung 212 vorgesehen, welche mittels einer Klappe 214 verschlossen werden kann. Die Klappe 214 ist vorliegend in einem geöffneten Zustand gezeigt, so dass ein Innenraum des Rohrs 210 zugänglich ist.

In dem Rohr 210 befindet sich eine Kapsel 10 gemäß dem in Fig. 1 dargestellten ersten Ausführungsbeispiel. Dabei ist auch die Klappe 14 der Kapsel 10 geöffnet, so dass die Öffnung 12 der Kapsel 10 ebenfalls offen ist. Der Innenraum 20 der Kapsel 10 ist somit zugänglich.

Die Förderfläche 22 bildet in dem in Fig. 3a gezeigten Zustand eine ebene Erweiterung der Transportfläche 110. Dies bedeutet, dass ein Probenträger 140 ohne Hindernisse von der Transportfläche 110 auf die Förderfläche 22 und von der Förderfläche 22 auf die Transportfläche 110 gefahren werden kann.

Am gegenüberliegenden Ende des Rohrs 210 ist eine Antriebseinheit 220 ausgebildet. Die Antriebseinheit 220 ist dazu geeignet, einen Unter- oder Überdruck in dem Rohr 210 zu erzeugen, so dass auf einer Seite der Kapsel 10 ein Unter- oder Überdruck in dem Rohr 210 vorherrscht. Die Kapsel 10 ist dabei ausreichend dicht in dem Rohr 210 aufgenommen, so dass sie mittels dieses Unter- oder Überdrucks durch das Rohr bewegt werden kann. Dies ermöglicht es, die Kapsel 10 zwischen der ersten Position 202 und der entfernten Position 204 wie bei einer Rohrpost hin und her zu bewegen.

Des Weiteren weist die Versandvorrichtung 200 einen Greifer 230 auf, welcher in Fig. 3a lediglich schematisch dargestellt ist. Der Greifer 230 greift vorliegend einen Verschlusspfropfen 235, welcher vor dem Versand eines Probenträgers 140 mit einem darin aufgenommenen Probenbehälter 145 zum Verschließen des Probenbehälters 145 verwendet werden kann. Hierzu wird der Verschlusspfropfen 235 oben auf den Probenbehälter 145 aufgesteckt. Der Greifer 230 und der Verschlusspfropfen 235 bilden zusammen eine Verschließeinrichtung.

Die entfernte Position 204 ist benachbart zu der weiteren Transportfläche 110a gebildet, wobei die beiden Transportflächen 110 und 110a räumlich beabstandet sind. Dies bedeutet beispielsweise, dass kein unmittelbarer Übergang eines Probenträgers 140 von der Transportfläche 110 zu der weiteren Transportfläche 110a möglich ist.

Das Probenverteilungssystem 100 weist ferner eine elektronische Steuerungseinrichtung 150 auf. Die elektronische Steuerungseinrichtung 150 weist einen Prozessor und einen Programmspeicher auf, wobei in dem Programmspeicher Programmcode enthalten ist, welcher das Verhalten des Prozessors steuert.

Die elektronische Steuerungseinrichtung 150 kann die Elektromagnete 120, 120a und die Antriebseinheit 220 ansteuern. Sie kann des Weiteren die Klappe 14 der Kapsel 10 und die Klappe 214 des Rohrs 210 öffnen und schließen. Außerdem kann sie den Greifer 230 betätigen. Mittels der Hall-Sensoren 130 erhält die Steuerungseinrichtung 130 eine Rückmeldung über die Position des Probenträgers 140.

Die Steuerungseinrichtung 150 ist dazu in der Lage, mittels geeigneter Ansteuerung der Elektromagnete 120 bzw. 120a den Probenträger 140 über die Transportfläche 110 bzw. 110a zu bewegen. Soll der Probenträger 140 mit dem darin enthaltenen Probenröhrchen 145 von der Transportfläche 110 zu der weiteren Transportfläche 110a verschickt werden, so fährt die Steuerungseinrichtung 150 den Probenträger 140 in eine Position benachbart zur Förderfläche 22. Dann betätigt sie den Greifer 230 derart, dass das Probenröhrchen 145 mit dem Verschlusspfropfen 235 verschlossen wird. Damit wird eine in dem Probenröhrchen 145 enthaltene Probe gegen Auslaufen geschützt. Anschließend steuert die Steuerungseinrichtung 150 die Elektromagnete 120 sowie den in der Kapsel 10 enthaltenen Elektromagneten 24 derart an, dass der Probenträger 140 auf die Förderfläche 22 bewegt wird. Anders ausgedrückt wird der Probenträger 140 mit dem darin aufgenommenen Probenröhrchen 145 in die Kapsel 10 bewegt. Das Probenröhrchen 145 wird dabei mittels der Haltevorrichtung 26 seitlich stabilisiert.

Anschließend bewirkt die Steuerungseinrichtung 150 ein Schließen der beiden Klappen 14, 214 und betätigt die Antriebseinheit 220 derart, dass oberhalb der Kapsel 10 ein Unterdruck in dem Rohr 210 entsteht. Dies zieht die Kapsel 10 in Richtung zu der entfernten Position 204. Dort werden entsprechend Klappen, welche in Fig. 3b nicht dargestellt sind, geöffnet und der Probenträger 140 mit dem darin enthaltenen Probenbehälter 145 wird mittels der Elektromagnete 120a auf die weitere Transportfläche 110a überführt. Auf der weiteren Transportfläche 110a kann der Probenträger 140 mit dem darin enthaltenen Probenbehälter 145 in gleicher Weise bewegt werden wie auf der Transportfläche 110.

Es sei verstanden, dass anstelle der weiteren Transportfläche 110a beispielsweise auch ein Analysegerät an der entfernten Position 204 vorgesehen sein kann, zu welchem ein Probenträger 140 mit darin aufgenommenem Probenbehälter 145 verbracht werden kann. Ebenso sei verstanden, dass der gleiche Vorgang auch rückwärts ausgeführt werden kann, d.h. es kann beispielsweise ein Probenträger 140 mit darin enthaltenem Probenbehälter 145 von der weiteren Transportfläche 110a zu der Transportfläche 110 versendet werden.

Das Probenverteilungssystem 100 ist Bestandteil eines Laborautomatisierungssystems mit einer Anzahl von nicht näher dargestellten präanalytischen, analytischen und postanalytischen Stationen, die angrenzend an die Transportflächen 110 und/oder 110a angeordnet sind. Das Probenverteilungssystem 100 dient zum Transport der Probenbehälter zwischen diesen Stationen.

## Patentansprüche

1. Versandvorrichtung (200) zum Versenden von in jeweiligen Probenträgern (140) aufgenommenen Probenbehältern (145) von einer Transportfläche (110) eines Probenverteilungssystems (100) zu einer bezogen auf die Transportfläche (110) externen Position (204) und/oder von der externen Position (204) zu der Transportfläche (110),
- wobei ein jeweiliger Probenträger (140) mindestens ein magnetisch wirksames Element aufweist, das dazu ausgebildet ist, mit einem mittels mindestens eines elektromagnetischen Aktuators (120, 120a) erzeugten Magnetfeld derart wechselzuwirken, dass eine Antriebskraft auf den Probenträger (140) bewirkt wird,
- wobei die Versandvorrichtung (200) aufweist:
- ein Rohr (210), welches von der Transportfläche (110) zu der externen Position (204) führt,
- eine Kapsel (10), die in dem Rohr (210) zwischen der Transportfläche (110) und der externen Position (204) bewegbar ist und die eine Förderfläche (22) zur Aufnahme des Probenträgers (140) aufweist, und
- eine Antriebseinheit (220), die dazu ausgebildet ist, die Kapsel (10) in dem Rohr (210) zwischen der Transportfläche (110) und der externen Position (204) zu bewegen,
**dadurch gekennzeichnet, dass** die Versandvorrichtung (200) weiter aufweist:
- mindestens einen elektromagnetischen Aktuator (24), der unterhalb der Förderfläche (22) angeordnet ist und der dazu ausgebildet ist, den Probenträger (140) mit einer Antriebskraft zu beaufschlagen.

2. Versandvorrichtung (200) nach Anspruch 1, **gekennzeichnet durch**
- eine Verschließeinrichtung (230, 235), die dazu ausgebildet ist, den Probenbehälter (145) vor dem Einbringen in die Kapsel (10) zu verschließen.

3. Versandvorrichtung (200) nach Anspruch 1 oder 2, **dadurch gekennzeichnet, dass**
- die Kapsel (10) eine Haltevorrichtung (26) aufweist, die dazu ausgebildet ist, den Probenträger (140) mit dem Probenbehälter (145) in der Kapsel (10) zu fixieren.

4. Versandvorrichtung (200) nach einem der vorhergehenden Ansprüche, **dadurch gekennzeichnet, dass**
- die Kapsel (10a) eine Mehrzahl von Förderflächen (22a, 22b, 22c, 22d) aufweist, wobei unter einer jeweiligen Förderfläche (22a, 22b, 22c, 22d) mindestens ein elektromagnetischer Aktuator (24a, 24b, 24c, 24d) angeordnet ist, und
- die Kapsel (10) Mittel (28a) zum Verbringen einer der Förderflächen (22a, 22b, 22c, 22d) an eine bestimmte Position aufweist, die zum Be- und/oder Entladen geeignet ist.

5. Probenverteilungssystem (100), aufweisend:
- eine Anzahl von Probenträgern (140) zur Aufnahme eines oder mehrerer Probenbehälter (145), wobei ein jeweiliger Probenträger (140) mindestens ein magnetisch wirksames Element aufweist, das dazu ausgebildet ist, mit einem mittels mindestens eines elektromagnetischen Aktuators (120, 120a) erzeugten Magnetfeld derart wechselzuwirken, dass eine Antriebskraft auf den Probenträger (140) bewirkt wird,
- eine Transportfläche (110), die dazu ausgebildet ist, die Probenträger (140) zu tragen,
- eine Anzahl von elektromagnetischen Aktuatoren (120), die stationär unter der Transportfläche (110) angeordnet sind, wobei die elektromagnetischen Aktuatoren (120) dazu ausgebildet sind, Probenträger (140), die auf der Transportfläche (110) angeordnet sind, durch Ausüben einer magnetischen Kraft auf den Probenträger (140) zu bewegen,
- eine Versandvorrichtung (200) nach einem der vorhergehenden Ansprüche und
- eine Steuerungseinrichtung (150), die dazu ausgebildet ist,
- die unter der Transportfläche (110) angeordneten elektromagnetischen Aktuatoren (120) derart anzusteuern, dass sich ein jeweiliger Probenträger (140) auf der Transportfläche (110) entlang einer vorgebbaren Bewegungsbahn bewegt,
- den mindestens einen unter der Förderfläche (22) angeordneten elektromagnetischen Aktuator (24) und/oder die unter der Transportfläche (110) angeordneten elektromagnetischen Aktuatoren (120) derart anzusteuern, dass ein Probenträger (140) von der Transportfläche (110) in Richtung der Förderfläche (22) oder von der Förderfläche (22) in Richtung der Transportfläche (110) bewegt wird, und
- die Antriebseinheit (220) derart anzusteuern, dass die Kapsel (10) in dem Rohr (210) zwischen der Transportfläche (110) und der externen Position (204) bewegt wird.

6. Probenverteilungssystem (100) nach Anspruch 5, **dadurch gekennzeichnet, dass**
- die Kapsel (10) durch Verfahren in dem Rohr (210) in eine Ladeposition verbringbar ist, in welcher die Förderfläche (22) eine ebene Erweiterung der Transportfläche (110) bildet.

7. Probenverteilungssystem (100) nach Anspruch 5 oder 6, **dadurch gekennzeichnet, dass**
- die Steuerungseinrichtung (150) zum Versenden eines sich auf der Transportfläche (110) befindlichen Probenträgers (140) dazu ausgebildet ist,
- die Antriebseinheit (220) derart anzusteuern, dass die Kapsel (10) in eine Ladeposition bewegt wird, in der die Förderfläche (22) eine ebene Erweiterung der Transportfläche (110) bildet,
- die unter der Transportfläche (110) angeordneten elektromagnetischen Aktuatoren (120) derart anzusteuern, dass der zu versendende Probenträger (140) auf der Transportfläche (110) zu der Kapsel (10) bewegt wird,
- den mindestens einen unter der Förderfläche (22) angeordneten elektromagnetischen Aktuator (24) und/oder die unter der Transportfläche (110) angeordneten elektromagnetischen Aktuatoren (120) derart anzusteuern, dass der Probenträger (140) auf die Förderfläche (22) bewegt wird, und
- die Antriebseinheit (220) derart anzusteuern, dass die Kapsel (10) durch das Rohr (210) in Richtung der externen Position (204) bewegt wird.

8. Probenverteilungssystem (100) nach einem der Ansprüche 5 bis 7, **dadurch gekennzeichnet, dass**
- die Steuerungseinrichtung (150) zum Empfangen eines sich in der Kapsel (10) befindlichen Probenträgers (140) dazu ausgebildet ist,
- die Antriebseinheit (220) derart anzusteuern, dass die Kapsel (10) mit dem darin enthaltenen Probenträger (140) in eine Ladeposition bewegt wird, in der die Förderfläche (22) eine ebene Erweiterung der Transportfläche (110) bildet, und
- die unter der Transportfläche (110) angeordneten elektromagnetischen Aktuatoren (120) und/oder den mindestens einen unter der Förderfläche (22) angeordneten elektromagnetischen Aktuator (24) derart anzusteuern, dass der Probenträger (140) auf die Transportfläche (110) bewegt wird.

9. Probenverteilungssystem (100) nach einem der Ansprüche 5 bis 8, **gekennzeichnet durch**
- eine weitere Transportfläche (110a) an der externen Position (204), die dazu ausgebildet ist, Probenträger (140) zu tragen, und
- eine Anzahl von weiteren elektromagnetischen Aktuatoren (120a), die stationär unter der weiteren Transportfläche (110a) angeordnet sind, wobei die weiteren elektromagnetischen Aktuatoren (120a) dazu ausgebildet sind, Probenträger (140), die auf der weiteren Transportfläche (110) angeordnet ist, durch Ausüben einer magnetischen Kraft auf den Probenträger (140) zu bewegen,
- wobei die Versandvorrichtung (200) dazu ausgebildet ist, einen Probenträger (140) von der Transportfläche (110) zu der weiteren Transportfläche (110a) zu versenden und/oder von der weiteren Transportfläche (110a) zu der Transportfläche (110) zu versenden.

10. Probenverteilungssystem (100) nach einem der Ansprüche 5 bis 9, **dadurch gekennzeichnet, dass**
- die Transportfläche (110, 110a) in logische Felder unterteilt ist, wobei jedes logische Feld jeweils einem elektromagnetischen Aktuator (120) aus der Anzahl von elektromagnetischen Aktuatoren (120) bzw. aus der Anzahl von weiteren elektromagnetischen Aktuatoren (120a) zugeordnet ist,
- wobei die Förderfläche (22) der Kapsel (10) ein weiteres logisches Feld bildet, und wobei die Steuerungseinrichtung (150) das von der Förderfläche (22) gebildete logische Feld als logisches Feld einer der Transportflächen (110, 110a) handhabt, wenn die Förderfläche (22) eine ebene Erweiterung der jeweiligen Transportfläche (110, 110a) bildet.

11. Laborautomatisierungssystem, aufweisend:
- eine Anzahl von präanalytischen, analytischen und/oder postanalytischen Stationen, die dazu ausgebildet sind, Probenbehälter und/oder Proben, die in jeweiligen Probenbehältern enthalten sind, zu bearbeiten, und
- ein Probenverteilungssystem zum Transportieren der Probenbehälter zwischen den präanalytischen, analytischen und/oder postanalytischen Stationen nach einem der Ansprüche 5 bis 10.

## Claims

1. Dispatching device (200) for dispatching sample containers (145) received in respective sample carriers (140) from a transport surface (110) of a sample distribution system (100) to an external position (204) with respect to the transport surface (110) and/or from the external position (204) to the transport surface (110),
- wherein a respective sample carrier (140) comprises at least one magnetically active element, which is adapted to interact with a magnetic field generated by means of at least one electromagnetic actuator (120, 120a) such that a driving force is applied to the sample carrier (140),
- wherein the dispatching device (200) comprises:
- a tube (210), which leads from the transport surface (110) to the external position (204),
- a capsule (10), which is movable in the tube (210) between the transport surface (110) and the external position (204) and which comprises a conveying surface (22) for receiving the sample carrier (140), and
- a driving unit (220), which is adapted to move the capsule (10) in the tube (210) between the transport surface (110) and the external position (204),
**characterized in that** the dispatching device (200) further comprises:
- at least one electromagnetic actuator (24), which is arranged under the conveying surface (22) and which is adapted to apply a driving force to the sample carrier (140).

2. Dispatching device (200) according to claim 1, **characterized by**
- a closing device (230, 235), which is adapted to close the sample container (145) before the sample container (145) is introduced into the capsule (10).

3. Dispatching device (200) according to claim 1 or 2, **characterized in that**
- the capsule (10) comprises a holding device (26), which is adapted to fix the sample carrier (140) together with the sample container (145) in the capsule (10).

4. Dispatching device (200) according to one of the preceding claims, **characterized in that**
- the capsule (10a) comprises a plurality of conveying surfaces (22a, 22b, 22c, 22d), wherein at least one electromagnetic actuator (24a, 24b, 24c, 24d) is arranged under a respective conveying surface (22a, 22b, 22c, 22d), and
- the capsule (10) comprises means (28a) for bringing one of the conveying surfaces (22a, 22b, 22c, 22d) to a specific position that is suitable for loading and/or unloading.

5. Sample distribution system (100), comprising:
- a number of sample carriers (140) for receiving one or more sample containers (145), wherein a respective sample carrier (140) comprises at least one magnetically active element, which is adapted to interact with a magnetic field generated by means of at least one electromagnetic actuator (120, 120a) such that a driving force is applied to the sample carrier (140),
- a transport surface (110), which is adapted to carry the sample carriers (140),
- a number of electromagnetic actuators (120), which are arranged in a stationary manner under the transport surface (110), wherein the electromagnetic actuators (120) are adapted to move sample carriers (140) that are arranged on the transport surface (110) by applying a magnetic force to the sample carrier (140),
- a dispatching device (200) according to any of the preceding claims, and
- a control device (150), which is adapted to
- activate the electromagnetic actuators (120) arranged under the transport surface (110) such that a respective sample carrier (140) moves on the transport surface (110) along a predeterminable path of movement,
- activate the at least one electromagnetic actuator (24) arranged under the conveying surface (22) and/or the electromagnetic actuators (120) arranged under the transport surface (110) such that a sample carrier (140) is moved from the transport surface (110) in the direction of the conveying surface (22) or from the conveying surface (22) in the direction of the transport surface (110), and
- activate the driving unit (220) such that the capsule (10) is moved in the tube (210) between the transport surface (110) and the external position (204).

6. Sample distribution system (100) according to claim 5, **characterized in that**
- by being moved in the tube (210), the capsule (10) can be brought into a loading position, in which the conveying surface (22) forms a level extension of the transport surface (110).

7. Sample distribution system (100) according to claim 5 or 6, **characterized in that**
- for dispatching a sample carrier (140) located on the transport surface (110), the control device (150) is adapted to:
- activate the driving unit (220) such that the capsule (10) is moved into a loading position, in which the conveying surface (22) forms a level extension of the transport surface (110),
- activate the electromagnetic actuators (120) arranged under the transport surface (110) such that the sample carrier (140) to be dispatched is moved on the transport surface (110) to the capsule (10),
- activate the at least one electromagnetic actuator (24) arranged under the conveying surface (22) and/or the electromagnetic actuators (120) arranged under the transport surface (110) such that the sample carrier (140) is moved onto the conveying surface (22), and
- activate the driving unit (220) such that the capsule (10) is moved through the tube (210) in the direction of the external position (204).

8. Sample distribution system (100) according to one of claims 5 to 7, **characterized in that**
- for receiving a sample carrier (140) located in the capsule (10), the control device (150) is adapted to:
- activate the driving unit (220) such that the capsule (10) together with the sample carrier (140) contained therein is moved into a loading position, in which the conveying surface (22) forms a level extension of the transport surface (110), and
- activate the electromagnetic actuators (120) arranged under the transport surface (110) and/or the at least one electromagnetic actuator (24) arranged under the conveying surface (22) such that the sample carrier (140) is moved onto the transport surface (110).

9. Sample distribution system (100) according to one of claims 5 to 8, **characterized by**
- a further transport surface (110a) at the external position (204), which is adapted to carry sample carriers (140), and
- a number of further electromagnetic actuators (120a), which are arranged in a stationary manner under the further transport surface (110a), wherein the further electromagnetic actuators (120a) are adapted to move sample carriers (140) that are arranged on the further transport surface (110) by applying a magnetic force to the sample carrier (140),
- wherein the dispatching device (200) is adapted to dispatch a sample carrier (140) from the transport surface (110) to the further transport surface (110a) and/or from the further transport surface (110a) to the transport surface (110).

10. Sample distribution system (100) according to one of claims 5 to 9, **characterized in that**
- the transport surface (110, 110a) is divided into logical zones, wherein each logical zone is assigned to a respective electromagnetic actuator (120) from the number of electromagnetic actuators (120) or from the number of further electromagnetic actuators (120a),
- wherein the conveying surface (22) of the capsule (10) forms a further logical zone, and wherein the control device (150) handles the logical zone that is formed by the conveying surface (22) as a logical zone of one of the transport surfaces (110, 110a) when the conveying surface (22) forms a level extension of the respective transport surface (110, 110a).

11. Laboratory automation system, including:
- a number of pre-analytical, analytical and/or post-analytical stations, which are adapted to process sample containers and/or samples that are contained in respective sample containers, and
- a sample distribution system (100) for transporting the sample containers between the pre-analytical, analytical and/or post-analytical stations according to one of claims 5 to 10.

## Revendications

1. Dispositif d'envoi (200) destiné à envoyer des récipients à échantillon (145) accueillis dans des porte-échantillons (140) respectifs depuis une surface de transport (110) d'un système de distribution d'échantillons (100) vers une position externe (204) en référence à la surface de transport (110) et/ou depuis la position externe (204) vers la surface de transport (110),
- un porte-échantillon (140) respectif possédant au moins un élément magnétiquement actif qui est configuré pour interagir avec un champ magnétique généré au moyen d'au moins un actionneur électromagnétique (120, 120a) de telle sorte qu'une force d'entraînement est produite sur le porte-échantillon (140),
- le dispositif d'envoi (200) possédant :
- un tube (210) qui mène de la surface de transport (110) à la position externe (204),
- une capsule (10) qui peut être déplacée dans le tuyau (210) entre la surface de transport (110) et la position externe (204) et qui possède une surface de convoyage (22) destinée à accueillir le porte-échantillon (140), et
- une unité d'entraînement (220) qui est configurée pour déplacer la capsule (10) dans le tube (210) entre la surface de transport (110) et la position externe (204),
**caractérisé en ce que** le dispositif d'envoi (200) possède en outre :
- au moins un actionneur électromagnétique (24) qui est disposé au-dessous de la surface de convoyage (22) et qui est configuré pour soumettre le porte-échantillon (140) à une force d'entraînement.

2. Dispositif d'envoi (200) selon la revendication 1, **caractérisé par**
- un système de fermeture (230, 235) qui est configuré pour fermer le porte-échantillon (145) avant l'introduction dans la capsule (10).

3. Dispositif d'envoi (200) selon la revendication 1 ou 2, **caractérisé en ce que**
- la capsule (10) possède un dispositif de maintien (26) qui est configuré pour bloquer le porte-échantillon (140) comportant le récipient à échantillon (145) dans la capsule (10).

4. Dispositif d'envoi (200) selon l'une des revendications précédentes, **caractérisé en ce que**
- la capsule (10a) possède une pluralité de surfaces de convoyage (22a, 22b, 22c, 22d), au moins un actionneur électromagnétique (24a, 24b, 24c, 24d) étant disposé sous une surface de convoyage (22a, 22b, 22c, 22d) respective, et
- la capsule (10) possédant des moyens (28a) servant à amener l'une des surfaces de convoyage (22a, 22b, 22c, 22d) à une position définie qui est adaptée au chargement et/ou au déchargement.

5. Système de distribution d'échantillons (100), possédant :
- une pluralité de porte-échantillons (140) destinés à accueillir un ou plusieurs récipients à échantillon (145), un porte-échantillon (140) respectif possédant au moins un élément magnétiquement actif qui est conçu pour interagir avec un champ magnétique généré au moyen d'au moins un actionneur électromagnétique (120, 120a) de telle sorte qu'une force d'entraînement est produite sur le porte-échantillon (140),
- une surface de transport (110) qui est configurée pour porter les porte-échantillons (140),
- une pluralité d'actionneurs électromagnétiques (120) qui sont disposés en position fixe sous la surface de transport (110), les actionneurs électromagnétiques (120) étant configurés pour mouvoir les portes-échantillon (140) qui sont disposés sur la surface de transport (110) en exerçant une force magnétique sur les porte-échantillons (140),
- un dispositif d'envoi (200) selon l'une des revendications précédentes et
- un appareil de commande (150) qui est configuré pour
- exciter les actionneurs électromagnétiques (120) qui sont disposés sous la surface de transport (110) de telle sorte qu'un porte-échantillon (140) respectif se déplace sur la surface de transport (110) le long d'une trajectoire de déplacement qui peut être prédéfinie,
- exciter l'au moins un actionneur électromagnétique (24) disposé sous la surface de convoyage (22) et/ou les actionneurs électromagnétiques (120) qui sont disposés sous la surface de transport (110) de telle sorte qu'un porte-échantillon (140) est déplacé de la surface de transport (110) en direction de la surface de convoyage (22) ou de la surface de convoyage (22) en direction de la surface de transport (110), et
- commander l'unité d'entraînement (220) de telle sorte que la capsule (10) est déplacée dans le tube (210) entre la surface de transport (110) et la position externe (204).

6. Système de distribution d'échantillons (100) selon la revendication 5, **caractérisé en ce que**
- la capsule (10), par déplacement dans le tube (210), peut être amenée dans une position de chargement dans laquelle la surface de convoyage (22) forme une extension plane de la surface de transport (110).

7. Système de distribution d'échantillons (100) selon la revendication 5 ou 6, **caractérisé en ce que**
- l'appareil de commande (150), en vue d'envoyer un porte-échantillon (140) qui se trouve sur la surface de transport (110), est configuré pour
- exciter l'unité d'entraînement (220) de telle sorte que la capsule (10) est déplacée dans une position de chargement dans laquelle la surface de convoyage (22) forme une extension plane de la surface de transport (110),
- exciter les actionneurs électromagnétiques (120) qui se trouvent sous la surface de transport (110) de telle sorte que le porte-échantillon (140) à envoyer est déplacé sur la surface de transport (110) vers la capsule (10),
- exciter l'au moins un actionneur électromagnétique (24) disposé sous la surface de convoyage (22) et/ou les actionneurs électromagnétiques (120) qui sont disposés sous la surface de transport (110) de telle sorte que le porte-échantillon (140) est déplacé sur la surface de convoyage (22), et
- commander l'unité d'entraînement (220) de telle sorte que la capsule (10) est déplacée à travers le tube (210) en direction de la position externe (204).

8. Système de distribution d'échantillons (100) selon l'une des revendications 5 à 7, **caractérisé en ce que**
- l'appareil de commande (150), en vue de recevoir un porte-échantillon (140) qui se trouve dans la capsule (10), est configuré pour
- commander l'unité d'entraînement (220) de telle sorte que la capsule (10) avec le porte-échantillon (140) qu'elle contient est déplacée dans une position de chargement dans laquelle la surface de convoyage (22) forme une extension plane de la surface de transport (110), et
- exciter les actionneurs électromagnétiques (120) qui sont disposés sous la surface de transport (110) et/ou l'au moins un actionneur électromagnétique (24) disposé sous la surface de convoyage (22) de telle sorte que le porte-échantillon (140) est déplacé sur la surface de transport (110).

9. Système de distribution d'échantillons (100) selon l'une des revendications 5 à 8, **caractérisé par**
- une surface de transport supplémentaire (110a) au niveau de la position externe (204), laquelle est configurée pour porter des porte-échantillons (140) et
- une pluralité d'actionneurs électromagnétiques supplémentaires (120a) qui sont disposés en position fixe sous la surface de transport supplémentaire (110a), les actionneurs électromagnétiques supplémentaires (120a) étant configurés pour déplacer le porte-échantillon (140) qui est disposé sur la surface de transport supplémentaire (110) en exerçant une force magnétique sur le porte-échantillon (140),
- le dispositif d'envoi (200) étant configuré pour envoyer un porte-échantillon (140) depuis la surface de transport (110) vers la surface de transport supplémentaire (110a) et/ou depuis la surface de transport supplémentaire (110a) vers la surface de transport (110).

10. Système de distribution d'échantillons (100) selon l'une des revendications 5 à 9, **caractérisé en ce que**
- la surface de transport (110, 110a) est divisée en champs logiques, un actionneur électromagnétique (120) parmi la pluralité d'actionneurs électromagnétiques (120) ou parmi la pluralité d'actionneurs électromagnétiques supplémentaires (120a) étant respectivement associé à chaque champ logique,
- la surface de convoyage (22) de la capsule (10) formant un champ logique supplémentaire, et l'appareil de commande (150) gérant le champ logique formé par la surface de convoyage (22) comme un champ logique de l'une des surfaces de transport (110, 110a) lorsque la surface de convoyage (22) forme une extension plane de la surface de transport (110, 110a) respective.

11. Système d'automatisation de laboratoire, possédant :
- une pluralité de stations préanalytiques, analytiques et/ou post-analytiques, lesquelles sont configurées pour traiter des récipients à échantillon et/ou des échantillons qui sont contenus dans les récipients à échantillon respectifs, et
- un système de distribution d'échantillons selon l'une des revendications 5 à 10, destiné à transporter les porte-échantillons entre les stations préanalytiques, analytiques et/ou post-analytiques.
